# EUROPEAN PATENT APPLICATION

(11) **EP 2 933 939 A1**
(43) Date of publication of application: **21.10.2015**
(21) Application number: 15158012.3
(22) Date of filing: 06.03.2015
(51) Int. Cl.: H04H 20/62, H04N 21/214, H04H 20/20

(54) **Method and system for providing post-disembarkation entertainment service**

(30) Priority: 15.04.2014 EP 14305560
(71) Applicant: Thomson Licensing, 92130 Issy-les-Moulineaux (FR)
(72) Inventor: Lindemann, Robert, 30559 Hannover (DE)
(74) Representative: Schmidt-Uhlig, Thomas

(57) **Abstract**

A method and a system (10) for providing entertainment service to a passenger after disembarkation from a transport vehicle are described. The system comprises an onboard system (11) providing an onboard entertainment service in a transport vehicle, and a ground system (12) outside of the transport vehicle and functionally independent from the onboard system (11). The onboard entertainment service is used by a passenger during transport. The status information of the onboard entertainment service is recorded and transmitted from the onboard system (11) to the ground system (12). After disembarkation of the passenger from the transport vehicle, the ground system (12) provides a ground entertainment service to the passenger based on the transmitted status information.

## Description

### FIELD OF THE INVENTION

The present invention relates generally to a method and a system for providing entertainment service. More specifically, this invention relates to a method and a system for providing entertainment service to a passenger before and after his/her disembarkation from a transport vehicle.

### BACKGROUND OF THE INVENTION

Many transport vehicles designed to carry passengers are equipped with entertainment systems to provide onboard entertainment service, such as watching videos on-demand, listening to audio data, etc. For example, aircrafts are usually equipped with in-seat entertainment systems including displays mounted in the backrest of each seat, which the passengers can use to watch in-flight movies, television shows, play video games, etc., according to their individual selections. Such onboard entertainment service improves the transport experience and is especially valuable for a long and uneasy transport.

However, the onboard entertainment service is often interrupted or shut down by the end of the transport. Regardless of the type or content of the entertainment service, the same would be terminated whenever the transport is complete, and the passengers would have to stop the service in any case. This is quite unpleasant for the passengers because they cannot finish the entertainment program instantly and have to purchase the programs afterward if they would like to continue viewing or generally consuming the remainder thereof. For example, there is no way for a passenger to finish the movie he/she watched during a flight except buying a copy of the movie or going to a theatre for the same movie. Still then, if the passenger goes to a theatre he/she cannot fast forward to the position at which the onboard entertainment service was interrupted.

### SUMMARY OF THE INVENTION

Therefore, it is an objective of the present invention to provide an improved entertainment experience to the passengers. More specifically, the present invention proposes a method and a system for providing entertainment service to a passenger not only during the transport but also after his/her disembarkation from a transport vehicle.

According to the invention, a method for providing entertainment service to a passenger after his/her disembarkation from a transport vehicle is proposed. In the transport vehicle an onboard system provides an onboard entertainment service which is used by the passenger during transport. The method comprises: recording in the onboard system status information of the onboard entertainment service; transmitting the status information from the onboard system to a ground system outside of the transport vehicle and functionally independent from the onboard system; receiving the status information in the ground system; and providing in the ground system a ground entertainment service to a passenger based on the received status information and after disembarkation of the passenger from the transport vehicle.

Accordingly, a system configured to provide entertainment service to a passenger after disembarkation from a transport vehicle comprises an onboard system and a ground system. The onboard system includes an onboard entertainment server, a recording unit and a transmitting unit. The onboard entertainment server provides an onboard entertainment service in the transport vehicle which is used by a passenger during transport. The recording unit records status information of the onboard entertainment service. The transmitting unit transmits the recorded status information from the onboard system to the ground system. The ground system is outside of the transport vehicle and functionally independent from the onboard system, and includes a receiving unit and a ground entertainment server. The receiving unit receives the status information transmitted from the onboard system. The ground entertainment server provides a ground entertainment service to a passenger based on the received status information and after disembarkation of the passenger from the transport vehicle. The ground system can optionally include a ground storage unit to store the received status information.

The system of the present invention advantageously transmits status information about entertainment services used by a passenger rather than the entertainment content itself, thereby reducing the amount of data to be transmitted. An onboard entertainment service and a ground entertainment service are respectively provided to a passenger by the onboard and the ground entertainment servers. The content of the two entertainment services can be optionally the same or different. In other words, the content of the individual entertainment service is identified and provided to a passenger from separate entertainment content servers. In particular, the content of the ground entertainment service is identified and provided by the ground system based on the received status information of the onboard entertainment service. The entertainment services provided to a passenger include but are not limited to movies or general video programs, games, music, electronic books, slideshows and the like. Status information includes one or more from the non-exclusive list comprising title, language, cue-position, time code, playlist, and game status.

### BRIEF DESCRIPTION OF THE DRAWINGS

For a better understanding the invention shall now be explained in more detail in the following description with reference to the figures. It is understood that the invention is not limited to this disclosed exemplary embodiments and that specified features can also expediently be combined and/or modified without departing from the scope of the present invention as defined in the appended claims. In the figures:
- Fig. 1: is a schematic diagram illustrating a system configured to provide an entertainment service to a passenger after the disembarkation from a transport vehicle according to the present invention.
- Fig. 2: is a flow chart illustrating one preferred embodiment of the method according to the present invention.

### DETAILED DESCRIPTION OF PREFERRED EMBODIMENTS

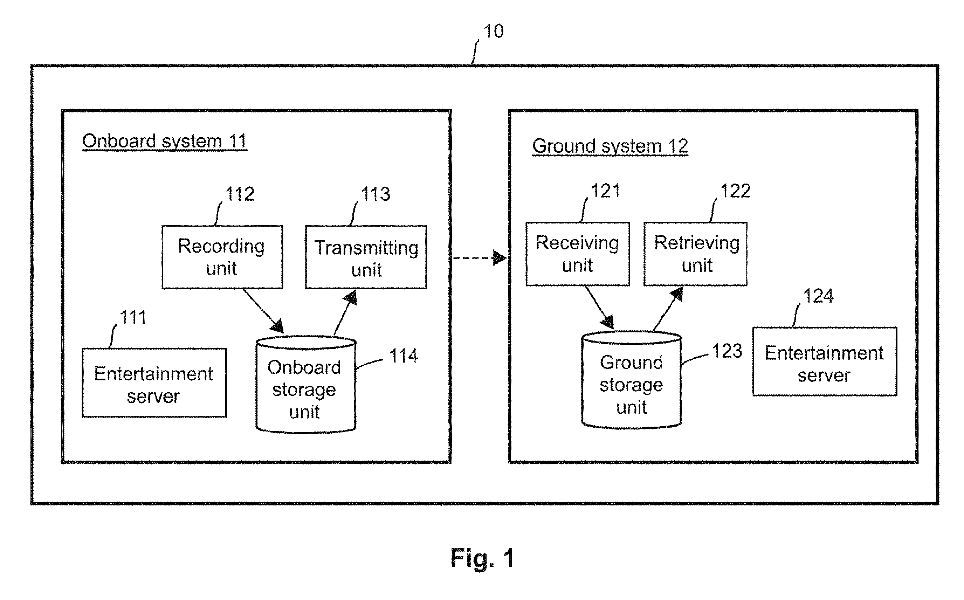

Fig. 1 shows an exemplary embodiment for the system of the present invention which is configured to implement the method for providing entertainment service to a passenger after his/her disembarkation from a transport vehicle. The system 10 comprises an onboard system 11 configured to provide an onboard entertainment service in a transport vehicle and used by passengers during transport, and a ground system 12 outside of the transport vehicle and functionally independent from the onboard system 11.

The onboard system 11 preferably comprises an onboard entertainment server 111 to provide an onboard entertainment service, a recording unit 112 to record status information of the onboard entertainment service, and a transmitting unit 113 to transmit the recorded status information to the ground system 12. Optionally, the recorded status information of the onboard entertainment service can be stored in an onboard storage unit 114 which can be either included in the onboard system 11 or be a supplementary storage device in the transport vehicle but separate from the system 11. Optionally, the recording unit 112 and the transmitting unit 113 can be combined in one operation unit (not shown) which can both record and transmit the status information of the onboard entertainment service.

The ground system 12 preferably comprises a receiving unit 121 to receive the status information transmitted from the onboard system 11, and a ground entertainment server 124 to provide a ground entertainment service to a passenger based on the received status information and after disembarkation of the passenger from the transport vehicle. Preferably, the ground system 12 further comprises a ground storage unit 123 to store the received status information. The storage unit can be any kind of storage device. Optionally, the ground system 12 can comprise a retrieving unit 123 which retrieves the stored status information. Of course, the retrieving unit 123 can optionally be combined in the ground entertainment server 124 or be a separate unit in the ground system 12. In other words, the ground entertainment server 124 can be able to both retrieve the status information and provide the ground entertainment service.

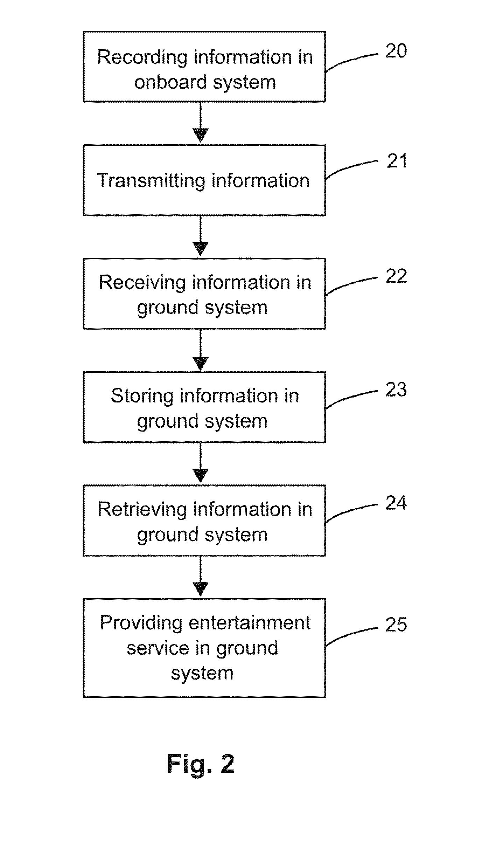

Fig. 2 illustrates a method according to the present invention for providing entertainment service to a passenger after disembarkation from a transport vehicle. The method can be performed, for example, using the above exemplary system 10, or alternatively by any suitable system. The method comprises: recording 20, in the onboard system 11, status information of an onboard entertainment service provided by the same; transmitting 21 the status information from the onboard system 11 to the ground system 12; receiving 22 the status information in the ground system 12; and providing 25 in the ground system a ground entertainment service to a passenger based on the received status information and after disembarkation of the passenger from the transport vehicle. Preferably, the method further comprises storing 23 in the ground system 12, for example in the ground storage unit 123 thereof, the received status information. Of course, the method can also comprise a step of retrieving 24 the received and stored status information, which can be implemented either by the retrieving unit 123 or the ground entertainment server 124.

Optionally, the transmission of the information can be conducted before, after or even during the disembarkation of the passenger from the transport vehicle. In other words, the status information of the entertainment service can be transmitted from the onboard system 11 to the ground system 12 at any time depending on different demands and available conditions and communication means. The transmission can be instant if there is synchronous communication between the onboard and ground systems 11, 12. When the two systems are not connected in real-time, the information can be temporarily stored and transmitted afterward when a connection is established. Of course, the information of the entertainment service can be transmitted between the onboard and ground systems 11, 12, by any communication device or server which uses, for example, wired or wireless technologies or storage medium such as CD and DVD.

The transport vehicle can be, for example, an aircraft, a train, an automobile, a ship, etc. In the case of an aircraft, the onboard system 11 can for example be a general in-flight entertainment system which is nowadays commonly provided in a passenger aircraft. Either of the onboard and the ground entertainment services can provide various kinds of service and content, e.g., video data, audio data, video games, films, electronic books, or a combination of the above services. The status information of the onboard entertainment service can refer to and include various and different kinds of information about the content, utilization, maintenance, and/or record of the entertainment service. For example, the status information can include identifiers for the actual content of the entertainment service like video and audio data, a playlist of the entertainment service selected or composed by the passenger during transport, identification information for identifying the passenger, information indicating a time point at which the entertainment service used during transport was interrupted, etc.

The ground entertainment service can be provided to a passenger by any suitable ground system 12 equipped with corresponding devices, for example, via internet, a streaming device, or other user terminal devices. Likewise, the onboard entertainment service can be provided to a passenger in the transport vehicle via a user terminal or a streaming device using otherwise known techniques.

The onboard entertainment service and the ground entertainment service are respectively provided to a passenger in the onboard and the ground entertainment servers 111, 124. For providing the ground entertainment service, the content thereof can be stored, e.g., in the storing unit 123, and provided directly in the ground entertainment system 12. Alternatively, the content of the ground entertainment service can be provided by the ground system 12 in a way of connecting to an external or supplementary content provider, for example, via internet, a streaming device, or other user terminal devices. In other words, the content of the ground entertainment service can be optionally stored in the ground entertainment system 12, or alternatively be provided from an external storage device.

According to the method of the present invention, the onboard entertainment service is provided to a passenger in the onboard system 11 during transport, followed by transmitting the status information of the onboard service from the onboard system 11 to the ground system 12. Based on and according to the received status information, the ground system 12 provides the ground entertainment service to a passenger after his/her disembarkation from the transport vehicle.

The respective content of the onboard and the ground entertainment services can be optionally the same or different. The content of the ground service can be the same as the one of the onboard service, in which case the passenger can review and use the same entertainment content again after his/her disembarkation. Alternatively, when the transmitted status information includes a time point at which the onboard entertainment service was interrupted, the provided content of the ground service can be mainly the content of the onboard service starting from the interrupted time point to the end of the service, rather than the complete content. In other words, the content of the ground entertainment service is adjustable and identified based on the status information.

One preferred embodiment of the method and system of this invention can be applied to the in-flight entertainment service and system for a passenger aircraft, which will be described and explained in detail in the following. It should be noted that, when repeated description and detailed descriptions of well-known functions or configurations may make unnecessarily obscure the gist of the present invention, the detailed description will be omitted.

Generally, the in-flight entertainment system is an in-seat system that each individual passenger can have his/her own entertainment device without disturbance from others.

During the flight, a passenger can arbitrarily select any available content of the onboard entertainment service he/she would like to enjoy, such as a movie, a video clip, an audio data, a video game, an electronic book, etc.

When the flight comes to an end and the in-flight entertainment service is terminated, the in-flight system implementing the method of this invention records the status information of the onboard entertainment service. Preferably, the identification information for identifying a flight passenger is likewise recorded. The identification information can be used afterward for a passenger to re-use or continue the entertainment service after his/her disembarkation. The passenger can be identified, for example, by the ticket number, which in turn is tied to the seat number in the aircraft.

Besides the identification information, the information indicating a time point at which the entertainment service was interrupted can also be recorded. The in-flight system can keep track of the time elapsed for the entertainment service of individual passengers. Once the service is stopped before it is fully finished, the information of the elapsed time and the interrupted time point is collected and stored, e.g., in a storage device of the in-flight system.

The above mentioned status information of the entertainment service is then transmitted, received, and preferably stored in a ground system, which is outside of the aircraft and functionally independent from the in-flight system. As previously described, the transmission between the in-flight system and the ground system can be conducted at any preferable timing and via any preferable communication method and device.

After the disembarkation of a passenger from the aircraft, he/she can either retrieve the transmitted status information from the ground system or continue the interrupted entertainment service based on the status information. The status information of the entertainment service can be represented and/or identified by various forms of identifiers, such as a hyperlink, an alpha-numeric code, a QR code, etc. These identifiers are preferably provided to the passengers prior to boarding or prior to disembarkation from the aircraft, e.g., refer to the ticket number or the boarding pass, or are shown on the display of the in-seat entertainment system on the aircraft after the entertainment service is terminated, allowing for the passenger to take a photo thereof, or take a note of the identifier. Alternatively, the identifiers can also be provided after the disembarkation, e.g., in a way that is tied with the ticket number or the booking reference such that the passenger can acquire the ground entertainment service by using or providing the reference information. Upon the receipt of the identifiers, the ground system can retrieve the transmitted status information and provide a ground entertainment service, for example, via a website link, internet, or a streaming server, to the passengers.

In other words, each individual passenger is provided with some specific identifiers to get access to the status information and the content of the ground entertainment service after disembarkation, using the ground system. It is preferred that the content of the onboard entertainment service provided by the in-flight system and the one provided by the ground system are the same. More preferably, the ground system can provide more or less the exact remainder of the entertainment service content of the in-flight system which the passengers used during the flight. In this way, the passenger can continue and finish the entertainment service that is interrupted by the end of the flight. For example, a passenger can use the ground system to finish the movie he/she watched on the flight, especially starting from the interrupted time point. In an embodiment, the content is the same, but the representation is different, adapted to a respective content providing means or terminal used by the passenger, e.g., matched to a screen resolution of a display used by the passenger that is different from the screen resolution of the onboard entertainment system.

Another embodiment of the method and system of this invention provides the possibility for a passenger to purchase the content consumed using the entertainment service after his/her disembarkation. The transmitted information from the in-flight system to the ground system can include a playlist of the entertainment service selected or composed by the passenger during the flight. After disembarkation, the passenger can get access to the playlist through the ground system, e.g., using the above mentioned identifiers and status information, and purchase any or all items from the playlist. Optionally, the purchase can be conducted either directly in a facilitative ground system or through a link to an online shop.

By transmitting the status information of the entertainment service rather than the entertainment content itself, and by providing a flexible ground entertainment service depending on various users' demand, the present invention provides an improved entertainment experience and service both for the passengers and the providers. With the access to the ground entertainment service, a passenger has an opportunity to continue and finish the interrupted onboard service after his/her disembarkation. Moreover, the passenger can further purchase and enjoy more content of the entertainment service. At the same time, the providers can reasonably limit and provide the content of the ground service based on the transmitted status information, which promises and remains the business interests for the providers. In addition, since only the status information is transmitted, the amount of data, and thus the required equipment for the transmission, is reduced.

## Claims

1. A method for providing entertainment service to a passenger after disembarkation from a transport vehicle, in the transport vehicle an onboard system providing an onboard entertainment service used by the passenger during transport, the method comprising:
- recording (20) in the onboard system status information of the onboard entertainment service, the status information including an identifier related to a transport title of the passenger;
- transmitting (21) the status information from the onboard system to a ground system outside of the transport vehicle and functionally independent from the onboard system;
- receiving (22) the status information in the ground system; and
- providing (25) through the ground system a ground entertainment service to the passenger upon receipt of the identifier from the passenger identifying the corresponding status information and after disembarkation of the passenger from the transport vehicle.

2. The method according to claim 1, further comprising storing (23) in the ground system the received status information.

3. The method according to claim 1, wherein the transmitted status information includes a playlist of the onboard entertainment service selected by the passenger during transport.

4. The method according to claim 1, wherein the transmitted status information includes identification information for identifying the passenger.

5. The method according to claim 1, wherein the transmitted status information includes a time point at which the onboard entertainment service was interrupted.

6. The method according to one of claims 3-5, wherein the status information including the playlist of the onboard entertainment service and/or the passenger identification information and/or the interrupted time point is represented or identified by one or more of a hyperlink, an alpha-numeric code, and a QR code provided to the passenger prior to disembarkation.

7. The method according to claim 1, wherein the content of the ground entertainment service provided in the ground system is the same as the content of the onboard entertainment service provided in the onboard system.

8. The method according to claim 5, wherein the content of the ground entertainment service comprises the content of the onboard entertainment service starting from the interrupted time point to the end of the service.

9. The method according to claims 1, 7 or 8, wherein the onboard and the ground entertainment service provide one or more of video data, audio data, video game, film, and electronic book.

10. The method according to claim 1, wherein the transport vehicle is one of an aircraft, a train, an automobile and a ship.

11. The method according to claim 1, wherein transmitting (21) and receiving (22) the status information of the onboard entertainment service is conducted before or after disembarkation of the passenger from the transport vehicle.

12. A system (10) configured to provide entertainment service to a passenger after disembarkation from a transport vehicle, comprising:
- an onboard system (11) including
an onboard entertainment server (111) configured to provide an onboard entertainment service in the transport vehicle and used by the passenger during transport,
a recording unit (112) configured to record status information of the onboard entertainment service, and
a transmitting unit (113) configured to transmit the recorded status information to a ground system (12), the status information including an identifier related to a transport title of the passenger; and
- a ground system (12) outside of the transport vehicle and functionally independent from the onboard system (11), the ground system (12) including
a receiving unit (121) configured to receive the status information transmitted from the onboard system (11) and
a ground entertainment server (124) configured to provide a ground entertainment service to the passenger upon receipt of the identifier from the passenger for identifying the corresponding status information and after disembarkation of the passenger from the transport vehicle.

13. The system according to claim 12, wherein the ground system (12) further includes a ground storage unit (123) configured to store the received status information.

14. The system according to claim 12, wherein the transport vehicle is one of an aircraft, a train, an automobile and a ship.

15. The system according to claim 12, wherein the content of the ground entertainment service provided in the ground system (12) is the same as the content of the onboard entertainment service provided in the onboard system (11).
